# EUROPEAN PATENT SPECIFICATION

(11) **EP 1 985 500 B1**
(45) Date of publication and mention of the grant of the patent: **14.03.2012**
(21) Application number: 08007766.2
(22) Date of filing: 22.04.2008
(51) Int. Cl.: B60R 11/02, B60R 16/02, H04B 1/16, H05K 5/00

(54) **Electronic interface system between a digital file drive and the audio system of a vehicle**
Elektronische Schnittstelle zwischen einem digitalen Dateienlaufwerk und dem Audiosystem eines Fahrzeugs
Système d'interface électronique entre une commande de fichier numérique et le système audio d'un véhicule

(30) Priority: 23.04.2007 IT MO20070140
(43) Date of publication of application: 29.10.2008
(73) Proprietor: Meta System S.p.A., 42100 Reggio Emilia (IT)
(72) Inventor: Simonazzi, Giuseppe, 42100 Reggio Emilia (IT)
(74) Representative: Brunacci, Marco

(56) References cited:
- EP-A- 1 698 518
- WO-A-2005/029826
- DE-A1-102005 039 943
- GB-A- 2 439 985
- US-A1- 2003 128 504
- US-A1- 2005 277 384
- US-B1- 7 269 002
- "DAS ULTIMATIVE CAR-IT FUER IHREN IPOD" INTERNET CITATION, [Online] 11 February 2006 (2006-02-11), XP002443220 Retrieved from the Internet: URL:http://web.archive.org/web/20060211105 525/http://www.acvgmbh.de/densi on/icelink_plus.htm> [retrieved on 2007-07-17]
- ANONYMOUS: "DS-A1" INTERNET CITATION, [Online] 2 November 2005 (2005-11-02), page 1, XP002476995 Retrieved from the Internet: URL:http://web.archive.org/web/20051102070 527/http://www.eu.onkyo.com/de/ products/product_de_461153.html> [retrieved on 2008-04-08]

## Description

This invention relates to an electronic interface system between a digital audio file drive and the audio system of a vehicle.

The use is known of interface devices between the audio system installed in a vehicle and electronic apparatus located inside the compartment of the vehicle such as, e.g., mobile phones, navigation systems and multimedia devices.

With particular reference to digital audio players, of the iPod^{®} type or the like, it is known, e.g., to make a connection between such devices and the car radio of the vehicle using one or more electrical cables.

These electrical cables comprise on one end a connector associated to the digital drive and on the other end another connector that is connected directly to the car radio thus allowing the transfer of digital data deriving from the play of the excerpt from the drive to the car radio and from here to the audio transmission system of the vehicle.

The connection to the car radio can be done, e.g., with installation kits for connecting the digital drive to the car radio, e.g. using an aerial to receive the broadcasting signal.

These kits necessitate the installation of a car radio working inside the vehicle, without which it is impossible to interface the digital drive directly with the audio transmission system, maintaining adequate quality levels.

In addition, they require installation entailing mechanical and electronic work on the vehicle which must be done by skilled labour.

Alternatively, it is also known to use car radios that include a front input port specifically for connecting to digital drives.

Again, it is always necessary to have a car radio available that is installed and working inside the vehicle.

Further this type of connection also uses an electrical connecting cable that, besides being ugly to look at, can hinder the driver when driving which increases driving-related risks.

In order to alter the play like, e.g., the volume, change the excerpt you are listening to or for special drive functions, you have to manipulate the selection keys of the digital file drive directly; consequently, the person who is driving the vehicle is necessarily distracted momentarily to take hold of the drive and manipulate the keys for the functions he wants; for the passengers at the back of the vehicle due to the short length of the wire such manipulation is difficult. Further the above mentioned systems they require a car radio installed and working inside the vehicle without which it is impossible to interface the digital drive directly with the audio transmission system, maintaining adequate quality levels.

From DE 10 2005 039943 A1 it is known (according to the preamble of claim 1) a multimedia expansion tool, for a car radio installed in a motor vehicle, which uses the interface radio output loudspeakers for simultaneous generation of improved audio sound by means of the frequency response equalizers and power amplifiers provided in the sound system of the motor vehicle, while maintaining the working of the car radio conforming to the indications of the manufacturer.

However even this multimedia expansion tool requests the installation on the motor vehicle of a car radio, of which the tool expands the performances and without which it cannot work.

The main aim of this invention is to provide an electronic interface system between a digital file drive and the audio system of a vehicle that allows the use of a digital drive inside a vehicle even without a car radio.

Within the sphere of this technical aim, another object of this invention is to obtain a system that is compact, easy to install and does not require external electrical cables thus being safer, more practical and appreciable from the aesthetic aspect.

Another object of this invention is to provide an electronic interface system between a digital file drive and the audio system of a vehicle that will overcome the mentioned drawbacks of the known technique with a simple and rational solution that is easy and effective to use and economical.

Another object of the system according to the invention is to recharge the battery of the digital file drive while it is being used, thus allowing it to be used for a long time.

The objects listed above are all achieved with this electronic interface system between a digital file drive and the audio system of a vehicle, having all the features provided by main independent claim 1.

Further characteristics and advantages of this invention will appear more evident from the description of a preferred, but not only, embodiment of an electronic interface device between a digital file drive and the audio system of a vehicle, illustrated indicatively by way of non limiting example, in the attached drawings wherein:
figure 1 is a schematic view of the electronic interface system according to the invention connected to the audio system of a vehicle;
figure 2 is a schematic view of a system according to the invention installed in the compartment of a vehicle.

With particular reference to such Figures, by 1 is globally indicated an electronic interface system between a digital file drive and the audio system of a vehicle.

The system 1 is installed inside the compartment of a vehicle and comprises a management and control apparatus 2, first connection means 3 between the apparatus 2 and a digital file drive 4 and second connection means 5 between the management and control apparatus 2 and the audio transmission system 6 of the vehicle.

The management and control apparatus 2 comprises amplification means 7 of an electrical signal coming from the drive 4.

The first connection means 3 are associated to the drive 4 and to the amplification means 7, allowing their electronic connection.

Advantageously, the first connection means 3 comprise a support base 8 for the drive 4 which is positioned inside the compartment of the vehicle, and a first electrical cable 9 arranged between the management and control apparatus 2 and the support base 8.

Usefully, the support base 8 is located on the dashboard P in proximity of the driver's side to facilitate access by the driver; in other possible embodiments this support base 8 can be inserted in specific compartments inside the vehicles.

The support base 8 comprises a slot 10, shaped according to a pre-established design and suitable for housing the drive 4 in a movable fashion.

In proximity of this slot 10, and in particular at the bottom of it, an electronic connection port 11 is positioned composed of a plurality of electrical contacts that electronically connects the drive 4 to the support base 8 and, in particular, to the first electrical cable 9.

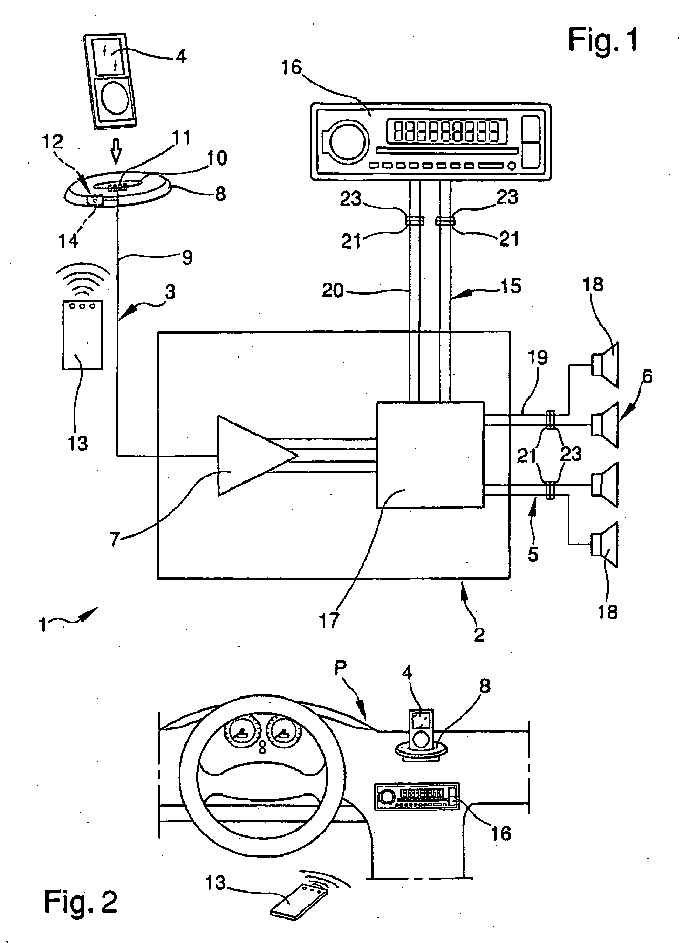

The support base 8 also comprises a receiver module 12 suitable for receiving an electromagnetic signal from a remote control element 13; this control element 13 is, in the particular embodiment of figure 1, a portable remote control.

Advantageously, the receiver module 12 comprises an actuator element 14 which is associated to the electronic connection port 11 and suitable for modifying some of the parameters relevant to the drive 4 like, e.g., the volume, the file being played, the state of on, off, pause, etc.

The use of the remote control 13 is advantageous for people in the vehicle who are some distance away from the support base 8; the driver, or any passengers near the driver can, instead, use the remote control 13 or the keypad of the drive 4 as they prefer, to change the parameters.

In the particular embodiment illustrated in figure 1, the support base 8 is oval in shape; however, it is not excluded that the support base 8 can be of a different shape or integrated and concealed inside the compartment of the vehicle.

The management and control apparatus 2, or alternatively the support base 8, is connected to the vehicle's supply system, supplying electricity to the amplification means 7 and to the drive 4 so the first can amplify the electrical input signal and the second can be recharged.

The system 1 also comprises third connection means 15 that establish an electronic connection between the management and control apparatus 2 and the car radio 16 installed in the vehicle; however other embodiments of the system 1 are not excluded, where the car does not have a car radio 16 to which to associate the management and control apparatus 2.

Usefully, the management and control apparatus 2 comprises selection means 17 of the electrical connection between the audio transmission system 6 and just one between the drive 4 and the car radio 16; the selection means 17 therefore consist of a switch suitable for choosing the signal of just one sound source either the one coming from the drive 4 or the one from the car radio 16.

The selection means 17 are associated to the amplification means 7, to the third connection means 15, that send an electrical input signal to the car radio 16 and to the second connection means 5 which, instead, transmit an electrical output signal towards the audio transmission system 6 of the vehicle, shown in figure 1 as a plurality of loudspeakers 18.

The second connection means 5 and the third connection means 15 comprise, respectively, a second electrical cable 19, arranged between the management and control apparatus 2 and the audio transmission system 6, and a third electrical cable 20 arranged between the car radio 16 and the apparatus 2; in particular, the second electrical cable 19 and the third electrical cable 20 consist of a bundle of electrical wires.

At the free ends of the second electrical cable 19 and of the third electrical cable 20 standard type connectors 21 are associated suitable for a "pin-to-pin" connection with the pins 22 of the car radio 16 and with the pins 23 of the audio transmission system 6.

The system 1 is suitable for working in particular with drives 4 of the type comprising a set of external electrical contacts for the control of some operations (e.g. recharging or modifying the playing parameters) like, e.g., the iPod^{®} or the like.

The system 1 according to the invention operates as follows.

Once the drive 4 has been fitted in the special shaped slot 10, the electrical signal coming from it is amplified by the amplification means 7.

The amplified signal goes through the switch 17 and sent to the audio transmission system 6.

In this way the system 1 does not require any car radio to be installed.

But if there is also a car radio 16 in the vehicle, the electrical signal coming from it is sent from the third connection means 15 directly to the switch 17.

If the drive 4 is working, the switch 17 excludes the signal coming from the car radio 16; if, instead, the drive 4 is not working or not connected to the support base 8, the signal of the car radio 16 is sent to the audio transmission system 6.

It has, in fact, been seen how the invention described reaches the objects proposed and, in particular, the fact is underlined that the system 1 according to the invention is suitable for working inside a vehicle even without a car radio.

Another advantage is the absence of electrical cables inside the compartment which could hinder the driver's movements.

Another advantage achieved is that the support base allows a stable housing while simultaneously being easily accessible both by the driver and by a possible passenger.

In addition, the system according to the invention is easy to install in the vehicle, reducing labour time and, as a result, the related costs.

## Claims

1. Electronic interface system (1) between at least one digital audio file drive (4) and an audio transmission system (6) of a vehicle, comprising:
a management and control apparatus (2) to be installed in the vehicle and being provided with amplification means (7) for amplifying an electrical signal coming from said at least one digital audio file drive (4);
first connection means (3) associated to said management and control apparatus (2) and to said at least one digital audio file drive (4), allowing their electronic connection;
second connection means (5) between said management and control apparatus (2) and the vehicle's audio transmission system (6), wherein said second connection means (5) transmit an electrical output signal towards the audio transmission system (6) of the vehicle; and
third connection means (15) for establishing an electronic connection between said management and control apparatus (2) and a car radio (16) installed in said vehicle,
said system being **characterised in that** said management and control apparatus (2) comprises selection means (17) associated to said amplification means (7), to said second connection means (5) and to said third connection means (15), for selecting the electrical connection between said audio transmission system (6) and just one between two sound sources corresponding to said digital audio file drive (4) and said car radio (16),
wherein, with no car radio installed in the vehicle, said selection means (17) send the signal, amplified by said amplification means (7) and coming from said digital audio file drive (4), to said audio transmission system (6) of the vehicle, whereby said electronic interface system (1) does not require any car radio to be present and installed on the vehicle, and
wherein, with a car radio (16) installed in the vehicle, said selection means (17) exclude the signal, coming from the car radio (16), to be sent to the audio transmission system (6) of the vehicle, when the digital audio file drive (4) is working, and instead send the signal, coming from the car radio (16), to said audio transmission system (6), when the digital audio file drive (4) is not working or is not connected to said first connection means (3).

2. System according to claim 1, **characterised by** the fact that said selection means comprise an electronic switch (17).

3. System according to claim 1 or 2, **characterised by** the fact that said first connection means (3) comprise a support base (8) for said digital audio file drive (4) which can be positioned inside the compartment of said vehicle.

4. System according to claim 3, **characterised by** the fact that said support base (8) can be located on the dashboard (P) of said vehicle.

5. System according to claim 3 or 4, **characterised by** the fact that said support base (8) comprises a slot (10) shaped according to a pre-established design suitable for housing said digital file drive (4) in a movable fashion.

6. System according to claim 4, **characterised by** the fact that said support base (8) comprises at least one electronic connection port (11) arranged in proximity of said slot (10) and suitable for electronically connecting said digital file drive (4) to said support base (8).

7. System according to any one of claims 3 to 6, **characterised by** the fact that said support base (8) comprises a receiver module (12) suitable for receiving an electromagnetic signal from a remote control element (13).

8. System according to claim 7, **characterised by** the fact that said remote control element (13) is of the type of a portable remote control or the like.

9. System according to claim 7 or 8, **characterised by** the fact that said receiver module (12) comprises an actuator element (14) suitable for modifying at least one among the volume, the digital file being played and the state of on of said digital file drive.

10. System according to any one of claims 3 to 9 **characterised by** the fact that said first connection means (3) comprise at least a first electrical cable (9) arranged between said support base (8) and said management and control apparatus (2).

11. System according to any one of the preceding claims, **characterised by** the fact that said second connection means (5) comprise at least a second electrical cable (19) arranged between said management and control apparatus (2) and said audio transmission system (6).

12. System according to any one of the preceding claims, **characterised by** the fact that said third connection means (15) comprise at least a third electrical cable (20) arranged between said car radio (16) and said management and control apparatus (2).

13. System according to claim 12, as dependent on claim 11, **characterised by** the fact that at least one between said second (5) and said third connection means (15) comprises at least one standard type connector (21) associated to the respective free end of at least one between said second electrical cable (19) and third electrical cable (20) and suitable for the connection with at least one corresponding pin (23, 22) of at least one between said audio transmission system (6) and said car radio (16).

14. System according to any one of the claims 3 to 13 **characterised by** the fact that said support base (8) is substantially oval in shape.

15. System according to any one of claims 3 to 14 **characterised by** the fact that support base (8) is integrated and concealed in said vehicle.

16. System according to any one of the preceding claims, **characterised by** the fact that said audio transmission system (6) comprises at least one loudspeaker.

## Patentansprüche

1. Elektronisches Schnittstellensystem (1) zwischen wenigstens einem Laufwerk (4) für digitale Audiodateien und einem Audioübertragungssystem (6) eines Fahrzeugs, das umfasst:
eine Management- und Steuervorrichtung (2), die in dem Fahrzeug zu installieren ist und mit Verstärkungsmitteln (7) versehen ist, um ein elektrisches Signal, das von dem wenigstens einen Laufwerk (4) für digitale Audiodateien ankommt, zu verstärken;
erste Verbindungsmittel (3), die der Management- und Steuervorrichtung (2) und dem wenigstens einen Laufwerk (4) für digitale Audiodateien zugeordnet sind und deren elektrische Verbindung ermöglichen;
zweite Verbindungsmittel (5) zwischen der Management- und Steuervorrichtung (2) und dem Audioübertragungssystem (6) des Fahrzeugs, wobei die zweiten Verbindungsmittel (5) ein elektrisches Ausgangssignal zu dem Audioübertragungssystem (6) des Fahrzeugs übertragen; und
dritte Verbindungsmittel (15), um eine elektronische Verbindung zwischen der Management- und Steuervorrichtung (2) und einem in dem Fahrzeug installierten Autoradio (16) herzustellen,
wobei das System **dadurch gekennzeichnet ist, dass** die Management- und Steuervorrichtung (2) Auswahlmittel (17) enthält, die den Verstärkungsmitteln (7), den zweiten Verbindungsmitteln (5) und den dritten Verbindungsmitteln (15) zugeordnet sind, um die elektrische Verbindung zwischen dem Audioübertragungssystem (6) und genau einer von zwei Schallquellen, die dem Laufwerk (4) für digitale Audiodateien und dem Autoradio (16) entsprechen, auszuwählen,
wobei die Auswahlmittel (17) dann, wenn in dem Fahrzeug kein Autoradio installiert ist, das Signal, das durch die Verstärkungsmittel (7) verstärkt wird und von dem Laufwerk (4) für digitale Audiodateien ankommt, zu dem Audioübertragungssystem (6) des Fahrzeugs senden, wodurch das elektronische Schnittstellensystem (1) nicht erfordert, dass im Fahrzeug ein Autoradio vorhanden ist und installiert ist, und
wobei die Auswahlmittel (17) dann, wenn ein Autoradio (16) in dem Fahrzeug installiert ist, verhindern, dass das von dem Autoradio (16) ankommende Signal zu dem Audioübertragungssystem (6) des Fahrzeugs gesendet wird, wenn das Laufwerk (4) für digitale Audiodateien arbeitet, und stattdessen das von dem Autoradio (16) ankommende Signal zu dem Audioübertragungssystem (6) senden, wenn das Laufwerk (4) für digitale Audiodateien nicht arbeitet oder nicht mit den ersten Verbindungsmitteln (3) verbunden ist.

2. System nach Anspruch 1, **dadurch gekennzeichnet, dass** die Auswahlmittel einen elektronischen Schalter (17) enthalten.

3. System nach Anspruch 1 oder 2, **dadurch gekennzeichnet, dass** die ersten Verbindungsmittel (3) eine Unterstützungsbasis (8) für das Laufwerk (4) für digitale Audiodateien aufweisen, die in dem Fahrgastraum des Fahrzeugs positioniert werden kann.

4. System nach Anspruch 3, **dadurch gekennzeichnet, dass** die Unterstützungsbasis (8) an dem Armaturenbrett (P) des Fahrzeugs angeordnet sein kann.

5. System nach Anspruch 3 oder 4, **dadurch gekennzeichnet, dass** die Unterstützungsbasis (8) einen Schlitz (10) aufweist, der zu einem im Voraus festgelegten Entwurf geformt ist, der geeignet ist, das Laufwerk (4) für digitale Dateien beweglich aufzunehmen.

6. System nach Anspruch 4, **dadurch gekennzeichnet, dass** die Unterstützungsbasis (8) wenigstens einen elektronischen Verbindungsanschluss (11) aufweist, der in der Nähe des Schlitzes (10) angeordnet ist und das Laufwerk (4) für digitale Dateien mit der Unterstützungsbasis (8) elektronisch verbinden kann.

7. System nach einem der Ansprüche 3 bis 6, **dadurch gekennzeichnet, dass** die Unterstützungsbasis (8) ein Empfängermodul (12) enthält, das ein elektromagnetisches Signal von einem entfernten Steuerelement (13) empfangen kann.

8. System nach Anspruch 7, **dadurch gekennzeichnet, dass** das entfernte Steuerelement (13) vom Typ einer tragbaren Fernsteuerung oder dergleichen ist.

9. System nach Anspruch 7 oder 8, **dadurch gekennzeichnet, dass** das Empfängermodul (12) ein Bedienelement (14) enthält, das die Lautstärke und/oder die gespielte digitale Datei und/oder den Einschaltzustand des Laufwerks für digitale Dateien verändern kann.

10. System nach einem der Ansprüche 3 bis 9, **dadurch gekennzeichnet, dass** die ersten Verbindungsmittel (3) wenigstens ein erstes elektrisches Kabel enthalten, das zwischen der Unterstützungsbasis (8) und der Management-und Steuervorrichtung (2) angeordnet ist.

11. System nach einem der vorhergehenden Ansprüche, **dadurch gekennzeichnet, dass** die zweiten Verbindungsmittel (5) wenigstens ein zweites elektrisches Kabel (19) enthalten, das zwischen der Management- und Steuervorrichtung (2) und dem Audioübertragungssystem (6) angeordnet ist.

12. System nach einem der vorhergehenden Ansprüche, **dadurch gekennzeichnet, dass** die dritten Verbindungsmittel (15) wenigstens ein drittes elektrisches Kabel (20) aufweisen, das zwischen dem Autoradio (16) und der Management- und Steuervorrichtung (2) angeordnet ist.

13. System nach Anspruch 12, wenn abhängig von Anspruch 11, **dadurch gekennzeichnet, dass** die zweiten (5) und/oder die dritten Verbindungsmittel (15) wenigstens einen Standardverbinder (21) aufweisen, der dem jeweiligen freien Ende des zweiten elektrischen Kabels (19) bzw. des dritten elektrischen Kabels (20) zugeordnet ist und mit wenigstens einem entsprechenden Anschlussstift (23, 22) des Audioübertragungssystems (6) und/oder des Autoradios (16) verbunden werden kann.

14. System nach einem der Ansprüche 3 bis 13, **dadurch gekennzeichnet, dass** die Unterstützungsbasis (8) eine im Wesentlichen ovale Form hat.

15. System nach einem der Ansprüche 3 bis 14, **dadurch gekennzeichnet, dass** die Unterstützungsbasis (8) in das Fahrzeug integriert ist und darin verborgen ist.

16. System nach einem der vorhergehenden Ansprüche, **dadurch gekennzeichnet, dass** das Audioübertragungssystem (6) wenigstens einen Lautsprecher umfasst.

## Revendications

1. Système d'interface électronique (1) entre au moins un lecteur (4) de fichiers audio numériques et un système (6) de transmission audio d'un véhicule, comprenant :
un dispositif (2) de gestion et de contrôle à installer dans le véhicule et pourvu de moyens d'amplification (7) pour amplifier un signal électrique venant dudit au moins un lecteur (4) de fichier audio numérique ;
des premiers moyens de connexion (3) associés audit dispositif (2) de gestion et de contrôle et audit au moins un lecteur (4) de fichier audio numérique, permettant leur connexion électronique ;
des deuxièmes moyens de connexion (5) entre ledit dispositif (2) de gestion et de contrôle et le système (6) de transmission audio du véhicule, lesdits deuxièmes moyens de connexion (5) envoyant un signal de sortie électrique en direction du système (6) de transmission audio du véhicule ; et
des troisièmes moyens de connexion (15) pour établir une connexion électronique entre ledit dispositif (2) de gestion et de contrôle et un autoradio (16) installé dans ledit véhicule,
ledit système étant ***caractérisé en ce que*** ledit dispositif (2) de gestion et de contrôle comprend des moyens de sélection (17) associés auxdits moyens d'amplification (7), auxdits deuxièmes moyens de connexion (5) et auxdits troisièmes moyens de connexion (15), pour choisir la connexion électrique entre ledit système (6) de transmission audio et une seule d'entre deux sources de son correspondant audit lecteur (4) de fichiers audio numériques et audit autoradio (16),
dans lequel, lorsqu'aucun autoradio n'est installé dans le véhicule, lesdits moyens (17) de sélection envoient le signal, amplifié par lesdits moyens d'amplification (7) et en provenance dudit lecteur (4) de fichiers audio numériques, audit système (6) de transmission audio du véhicule, ledit système d'interface électronique (1) ne réclamant pas qu'un autoradio soit présent et installé à bord du véhicule, et
dans lequel, lorsqu'un autoradio (16) est installé à bord du véhicule, lesdits moyens de sélection (17) empêchent le signal provenant de l'autoradio (16) d'être envoyé au système (6) de transmission audio du véhicule, lorsque le lecteur (4) de fichiers audio numériques est en fonctionnement, et à l'inverse envoient le signal provenant de l'autoradio (16) audit système (6) de transmission audio lorsque le lecteur (4) de fichiers audio numériques n'est pas en fonctionnement ou n'est pas relié auxdits premiers moyens de connexion (3).

2. Système selon la revendication 1, ***caractérisé par le fait que*** lesdits moyens de sélection comprennent un commutateur électronique (17).

3. Système selon la revendication 1 ou 2, ***caractérisé par le fait que*** lesdits premiers moyens de connexion (3) comprennent une base de support (8) pour ledit lecteur (4) de fichiers audio numériques qui peut être placé à l'intérieur de l'habitacle dudit véhicule.

4. Système selon la revendication 3, ***caractérisé par le fait que*** ladite base de support (8) peut être placée sur le tableau de bord (P) dudit véhicule.

5. Système selon la revendication 3 ou 4, ***caractérisé par le fait que*** ladite base de support (8) comprend une encoche (10) conformée selon un tracé préétabli apte à recevoir ledit lecteur (4) de fichiers numériques d'une manière amovible.

6. Système selon la revendication 4, ***caractérisé par le fait que*** ladite base de support (8) comprend au moins un port de connexion électronique (11) placé à proximité de ladite encoche (10) et apte à raccorder électroniquement ledit lecteur (4) de fichiers numériques à ladite base de support (8).

7. Système selon l'une quelconque des revendications 3 à 6, ***caractérisé par le fait que*** ladite base de support (8) comprend un module récepteur (12) apte à recevoir un signal électromagnétique d'un élément de télécommande (13).

8. Système selon la revendication 7, ***caractérisé par le fait que*** ledit élément de télécommande (13) est du type télécommande portative ou similaire.

9. Système selon la revendication 7 ou 8, ***caractérisé par le fait que*** ledit module récepteur (12) comprend un élément actionneur (14) apte à modifier au moins l'un d'entre le volume, le fichier numérique joué, et l'état "Marche" (en fonctionnement) dudit lecteur de fichier digital.

10. Système selon l'une quelconque des revendications 3 à 9, ***caractérisé par le fait* que** lesdits premiers moyens de connexion (3) comprennent au moins un premier câble électrique (9) disposé entre ladite base de support (8) et ledit dispositif (2) de gestion et de contrôle.

11. Système selon l'une quelconque des revendications précédentes, ***caractérisé par le fait que*** lesdits deuxièmes moyens de connexion (5) comprennent au moins un deuxième câble électrique (19) disposé entre ledit dispositif (2) de gestion et de contrôle et ledit système (6) de transmission audio.

12. Système selon l'une quelconque des revendications précédentes, ***caractérisé par le fait que*** lesdits troisièmes moyens de connexion (15) comprennent au moins un troisième câble électrique (20) disposé entre ledit autoradio (16) et ledit dispositif (2) de gestion et de contrôle.

13. Système selon la revendication 12 lorsqu'elle est dépendante de la revendication 11, ***caractérisé par le fait qu'**au* moins l'un d'entre lesdits deuxièmes (5) et troisièmes (15) moyens de connexion comprend au moins un connecteur (21) de type standard associé à l'extrémité libre respective d'au moins l'entre d'entre lesdits deuxième câble électrique (19) et troisième câble électrique (20), et apte à une connexion avec au moins une broche correspondante (23, 22) d'au moins l'un d'entre ledit système (6) de transmission audio et ledit autoradio (16).

14. Système selon l'une quelconque des revendications 3 à 13, ***caractérisé par le fait que*** ladite base de support (8) est de forme sensiblement ovale.

15. Système selon l'une quelconque des revendications 3 à 14, ***caractérisé par le fait que*** ladite base de support (8) est intégrée et encastrée dans ledit véhicule.

16. Système selon l'une quelconque des revendications précédentes, ***caractérisé par le fait que*** ledit système (6) de transmission audio comprend au moins un haut-parleur.
